# EUROPÄISCHE PATENTSCHRIFT

(11) **EP 1 886 871 B1**
(45) Veröffentlichungstag und Bekanntmachung des Hinweises auf die Patenterteilung: **16.01.2019**
(21) Anmeldenummer: 07014888.7
(22) Anmeldetag: 30.07.2007
(51) Int. Cl.: B60Q 1/26, B60Q 1/56

(54) **SIGNALLEUCHTE FÜR FAHRZEUGE**
SIGNAL LAMP FOR VEHICLES
FEU DE SIGNALISATION POUR VÉHICULES

(30) Priorität: 07.08.2006 DE 102006036859
(43) Veröffentlichungstag der Anmeldung: 13.02.2008
(73) Patentinhaber: HELLA GmbH & Co. KGaA, 59552 Lippstadt (DE)
(72) Erfinder: Mügge, Martin, Dipl.-Ing., 59590 Geseke (DE); Henneböhle, Klaus, Dipl.-Ing., 33142 Büren (DE); Roling, Heinrich, Dipl.-Ing., 59555 Lippstadt (DE)
(74) Vertreter: Ostermann, Thomas

(56) Entgegenhaltungen:
- DE-A1- 10 243 373
- DE-A1- 19 646 042
- US-A- 6 095 663
- US-A1- 2006 028 830
- US-B1- 7 241 019

## Beschreibung

Die Erfindung betrifft eine Signalleuchte für Fahrzeuge nach dem Oberbegriff des Patentanspruchs 1.

Aus der EP 1 332 957 A2 ist eine Signalleuchte für Fahrzeuge bekannt, die ein Gehäuse mit einer Mehrzahl von Leuchtdioden als Lichtquellen umfasst. Die Leuchtdioden sind auf einer stufenförmigen Trägerplatte angeordnet, wobei die jeweils einer Tragebene der Trägerplatte zugeordneten Leuchtdioden einer vorgegebenen Lichtfunktion zugeordnet sind. Die Leuchtdioden können zur Erzeugung eines Schlusslichtes und zur Erzeugung eines Bremslichtes genutzt werden. Die in Hauptabstrahlrichtung der Signalleuchte vorne liegende Öffnung des Gehäuses ist durch eine Lichtscheibe abgedeckt. Nachteilig an der bekannten Signalleuchte ist, dass die Leuchtdioden von außen stets sichtbar sind und dass sie nicht zur Erzeugung einer Kennzeichenlichtfunktion geeignet sind, da die Leuchtdioden von außen stets sichtbar sind.

Die US 6 095 663 A beschreibt eine Signalleuchte für Nutzfahrzeuge mit einer Mehrzahl von auf einer Trägerplatte montierten Leuchtdioden, mit einer den Leuchtdioden zugeordneten Reflexionseinheit zur Formung eines Lichtbündels sowie mit einem die Trägerplatte und die Lichtformungseinheit umgebenden zweiteiligen Gehäuse. Wenigstens ein Gehäuseteil ist als Lichtscheibe ausgebildet. Zur Erzeugung eines über den Abstrahlwinkel der einzelnen Leuchtdioden hinausgehenden Gesamtabstrahlwinkel der Kraftfahrzeugleuchte werden durch die Reflexionseinheit eine Mehrzahl von Lichtbündeln erzeugt, die gemeinsam einen Winkelbereich von bis zu 180° vollständig und unterbrechungsfrei ausleuchten. Die Nutzzeugleuchte kann wahlweise als eine Seitenmarkierungsleuchte oder als Umrissleuchte ausgebildet sein. Eine Realisierung beider Lichtfunktionen in einer einzelnen Leuchte beziehungsweise in einem Gehäuse scheidet aufgrund der gültigen Sicherheitsstandards und der verbindlich vorgegebenen, für die zwei Lichtfunktionen unterschiedlichen Anbaupositionen der Seitenmarkierungsleuchte und der Umrissleuchte am Nutzfahrzeug aus. Insofern dienen die verschiedenen Lichtbündel, die von der Reflexionseinheit geformt werden, dem Aufbau lediglich einer Lichtfunktion je Leuchte. Abhängig von der Anbauposition am Nutzfahrzeug wird entweder ein Seitenmarkierungslicht oder eine Umrissleuchte realisiert. Die Realisierung beider Lichtfunktionen in einem Gehäuse ist nicht möglich.

Aus der US 2006/028830 A1 ist eine Rückleuchte für Kraftfahrzeuge bekannt, in der eine Mehrzahl von Lichtfunktionen realisiert sind. Zur Realisierung der Mehrzahl von Lichtfunktionen sind in der Rückleuchte eine Mehrzahl von in Gruppen angeordneten Leuchtdioden angeordnet. Die Orientierung der verschiedenen Gruppen von Leuchtdioden in der Rückleuchte ist der jeweils zu erzielenden Lichtfunktion angepasst. Beispielsweise weisen Leuchtdioden, die zum Aufbau einer Rücklichtfunktion dienen, eine Hauptabstrahlrichtung auf, die entgegen der Fahrtrichtung orientiert ist. Demgegenüber sind Leuchtdioden, die zum Aufbau eines Positionslichts dienen, winkelversetzt auf einem separaten Trägerelement derart angeordnet, dass die Hauptabstrahlrichtung eines ersten Teils der Dioden entgegen der Fahrtrichtung des Fahrzeugs und die Hauptabstrahlrichtung eines zweiten Teils der Leuchtdioden in Fahrzeugquerrichtung orientiert ist. Nachteilig hierbei ist, dass die Leuchtdioden nicht in einer gemeinsamen Trägerebene angeordnet sind. Hierdurch ist die Bestückung der Trägerelemente aufwendig. Darüber hinaus sind für unterschiedli che Lichtfunktionen unterschiedliche Trägerelemente vorgesehen. Hierdurch erhöht sich der Aufwand für Logistik und Montage der Rückleuchte.

Aus der DE 102 43 373 A1 ist eine LED-Kraftfahrzeugleuchte bekannt, in der zwei unterschiedliche Lichtfunktionen realisiert sind. Zur Realisierung der unterschiedlichen Lichtfunktionen sind auf einer gemeinsamen, eben ausgebildeten Trägerplatte eine Mehrzahl von Leuchtdioden angeordnet, wobei ein erster Teil der Leuchtdioden zum Aufbau der ersten Lichtfunktion und ein zweiter Teil der Leuchtdioden zum Aufbau einer zweiten Lichtfunktionen dient. Der erste Teil der Leuchtdioden ist auf einer ersten Seite der Trägerplatte und der zweite Teil der Leuchtdioden auf einer zweiten Oberseite des Trägerelementes angeordnet. Das Trägerelement ist in der Rückleuchte derart orientiert angebracht, dass die Hauptabstrahlrichtung der Leuchtdioden und die Hauptabstrahlrichtung der Rückleuchte einen Winkel von 90° zueinander einnehmen. Dies führt dazu, dass die Trägerplatte im Wesentlichen lotrecht zur Lichtabschlussscheibe angeordnet ist. Die Leuchtdioden sind hierbei hinter einem in der Lichtabschlussscheibe vorgesehenen Reflexionsbereich verdeckt angeordnet. Nachteilig ist hierbei zum einen, dass die Leiterplatte von zwei Seiten bestückt werden muss. Dies führt zu einem erhöhten Bestückungsaufwand und in der Folge zu erhöhten Kosten. Darüber hinaus ist die Bautiefe der Rückleuchte durch die Abmessung der Trägerplatte bedingt eine besonders kompakte und insbesondere flachbauende Rückleuchte kann mit dieser Anordnung der Leuchtdioden nicht erzielt werden.

Aufgabe der vorliegenden Erfindung ist es, eine Signalleuchte für Fahrzeuge derart weiterzubilden, dass auf kostengünstige Weise eine kompakte Anordnung einer Signalleuchte geschaffen wird, wobei die einer Lichtfunktion zugeordneten Leuchtdioden von außen nicht sichtbar sind.

Zur Lösung dieser Aufgabe weist die Erfindung die Merkmale des Patentanspruchs 1 auf.

Der besondere Vorteil der Erfindung besteht darin, dass auf einer in einer einzigen Tragebene verlaufenden Trägerplatte eine Mehrzahl von Leuchtdioden angeordnet ist, die zur Erzeugung von unterschiedlichen Lichtfunktionen dienen. Eine erste aus mindestens einer Leuchtdiode gebildete Leuchteinheit dient zur Erzeugung einer ersten Lichtfunktion. Eine zweite aus mindestens einer Leuchtdiode gebildeten Leuchteinheit dient zur Erzeugung einer zweiten Lichtfunktion, wobei eine Lichtumlenkeinrichtung vorgesehen ist, die eine Doppelfunktion hat. Zum einen dient sie zur Lichtumlenkung des von der zweiten Leuchteinheit emittierten Lichtes in einem spitzen und/oder rechten und/oder stumpfen Winkel. Hierdurch kann das Licht der zweiten Leuchtfunktion in einer gewünschten Weise geführt werden, beispielsweise zur Erzeugung einer Kennzeichenlichtfunktion. Zum anderen dient die Lichtumlenkeinrichtung als Abdeckung für die Leuchtdioden der zweiten Leuchteinheit, so dass dieselben nicht von außen sichtbar sind. Dies kann aus designerischen Gründen gewünscht sein. Zum anderen können hierdurch auch gesetzliche Vorschriften erfüllt werden, nach denen beispielsweise bei der Lichtfunktion einer Kennzeichenleuchte kein weißes Licht entgegen der Fahrtrichtung des Fahrzeugs abgestrahlt werden darf. Vorteilhaft ermöglicht eine einzige und relativ kleine Trägerplatte einen kostengünstigen Aufbau der Signalleuchte, wobei das Gehäuse der Signalleuchte in einem relativ kleinen Karosserieöffnungs- bzw. -abdichtbereich angeordnet sein kann. Nach einer Variante der Erfindung weist die Lichtumlenkeinrichtung ein Lichtleitelement oder ein Reflektorelement auf, so dass das von der zweiten Leuchteinheit emittierte Licht in einem Winkelbereich zwischen 75° und 190° zur Hauptabstrahlrichtung umgelenkt wird und auf eine Fläche des Fahrzeuges trifft. Diese Fläche kann beispielsweise als Kennzeichenfläche ausgebildet sein, so dass ein Nummernschild des Fahrzeugs beleuchtet wird.

Nach einer bevorzugten Ausführungsform der Erfindung sind die Leuchtdioden der ersten und zweiten Leuchteinheit jeweils parallel zueinander ausgerichtet. Vorteilhaft kann herstellungstechnisch einfach eine Bestückung der vorzugsweise als Leiterplatte ausgebildeten Trägerplatte durch Leuchtdioden erfolgen. Die Hauptabstrahlrichtung bzw. Symmetrieachsen der Leuchtdioden sind parallel zueinander angeordnet.

Nach einer Weiterbildung der Erfindung können die Leuchtdioden auch auf einer Trägerplatte angeordnet sein, die zumindest teilweise die Kennzeichenfläche des Fahrzeugs einfasst. Hierdurch werden die Variationsmöglichkeiten für die Anordnung der zweiten Leuchteinheit zur Erzeugung einer Kennzeichenlichtfunktion erhöht, da die zweite Leuchteinheit zum einen stirnseitig des Kennzeichens und zum anderen an einer Längsseite des Kennzeichens angeordnet sein kann. Vorteilhaft wird hierdurch die Erzeugung der Kennzeichenlichtfunktion mit anderen Lichtfunktionen, wie beispielsweise Schlusslicht, Bremslicht, auf herstellungstechnisch einfache Weise kombiniert, wobei die Leuchtdioden der mehreren Lichtfunktionen auf einer gemeinsamen ebenen Trägerplatte angeordnet sind.

Nach einer weitere Variante der Erfindung ist die Fläche, auf der das Licht der zweiten Leuchteinheit mittels der Lichtumlenkeinrichtung auftrifft, auch als Reflektionsfläche ausgebildet sein, die das auftreffende Licht im Wesentlichen in Lichtabstrahlrichtung reflektiert, so dass das Licht der zweiten Leuchteinheit im Wesentlichen in gleicher Richtung wie das Licht der ersten Leuchteinheit abgestrahlt wird. Hierbei kann in einem in Hauptabstrahlrichtung vorderer Bereich der Lichtumlenkeinrichtung ein Rückstrahler angeordnet sein, so dass die gesamte Öffnungsfläche des Gehäuses in lichttechnischer Hinsicht genutzt wird. Die zweite Leuchteinheit kann beispielsweise zur Erzeugung einer Blinklichtfunktion dienen, wobei das
äußere Erscheinungsbild der Blinklichtfunktion auch für Designzwecke unästhetisch ansprechende Weise maßgeblich durch die Reflektorfläche bestimmt wird.

Weitere Vorteile der Erfindung ergeben sich aus den weiteren Unteransprüchen.

Ausführungsbeispiele der Erfindung werden nachfolgend anhand der Zeichnungen näher erläutert.

Es zeigen:
- Figur 1: einen Vertikalschnitt durch eine Signalleuchte nach einer ersten Ausführungsform sowie einer Kennzeichenfläche des Fahrzeugs,
- Figur 2: ein vergrößerter Vertikalschnitt der Signalleuchte gemäß Figur 1,
- Figur 3: ein Vertikalschnitt durch eine Signalleuchte nach einer zweiten Ausführungsform,
- Figur 4: ein vertikalschnitt durch eine Signalleuchte nach einer dritten Ausführungsform,
- Figur 5: eine schematische Vorderansicht einer Signalleuchte nach einer vierten Ausführungsform,
- Figur 6: eine schematische Vorderansicht einer Signalleuchte nach einer fünften Ausführungsform,
- Figur 7: einen Vertikalschnitt durch eine Signalleuchte nach einer weiteren Ausführungsform und
- Figur 8: einen Schnitt durch die Signalleuchte gemäß Figur 7 entlang der Schnittlinie A-A.

Eine Signalleuchte für Fahrzeuge kann beispielsweise als Heckleuchte ausgebildet sein zur Erzeugung einer Schluss-, Bremslicht-, Blinklicht- und/oder Kennzeichenlichtfunktion.

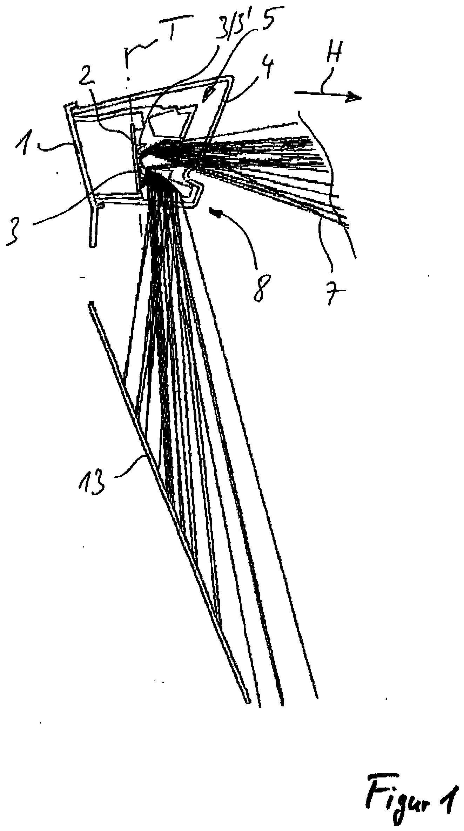

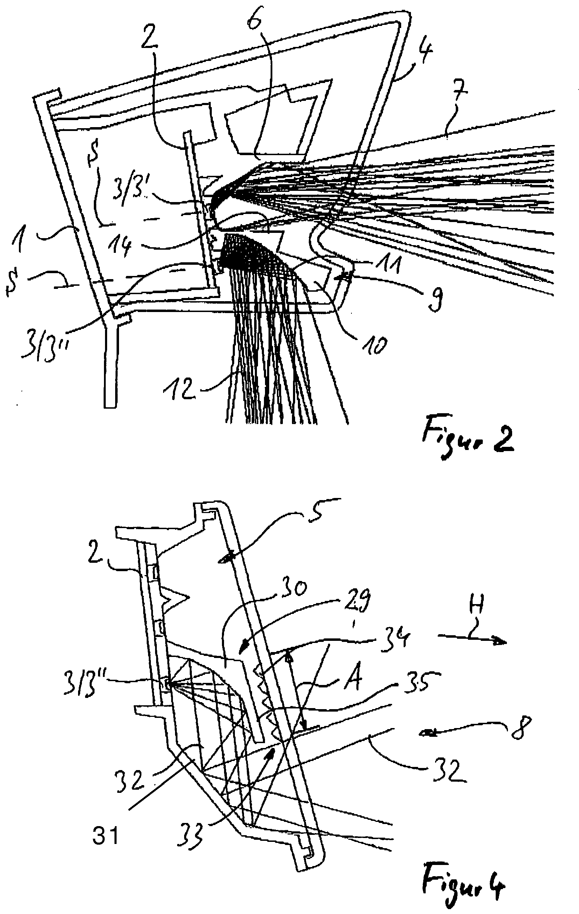

Nach einer ersten Ausführungsform einer Signalleuchte für Fahrzeuge, beispielsweise für Motorräder, gemäß den Figuren 1 und 2 ist ein Gehäuse 1 vorgesehen, in dem eine einzige in einer Tragebene T verlaufende Trägerplatte 2 angeordnet ist. Die aufrecht stehende Trägerplatte 2 ist als Leiterplatte ausgebildet, die mit einer Mehrzahl von Leuchtdioden 3 bestückt ist. Eine in Lichthauptlabstrahlrichtung H vorne liegende Öffnung des Gehäuses 1 ist durch eine vorzugsweise transparente und glasklare Lichtscheibe 4 abgedeckt.

In einem oberen Bereich des Gehäuses 1 ist eine erste Leuchteinheit 5 zur Erzeugung einer Schlusslichtfunktion (erste Lichtfunktion) angeordnet, die eine Mehrzahl von auf der Trägerplatte 2 angeordneten Leuchtdioden 3' umfasst. In einem oberen Bereich der Leuchteinheit 5 sind den Leuchtdioden 3' ein Reflektor 6 zugeordnet, der das von der ersten Leuchteinheit 5 emittierte Licht 7 entsprechend einer vorgegebenen Schlusslichtverteilung reflektiert und durch die Lichtscheibe 4 in die Umgebung austreten kann.

In einem unteren, der ersten Leuchteinheit 5 anschließenden Bereich des Gehäuses 1 ist eine zweite Leuchteinheit 8 vorgesehen zur Erzeugung einer Kennzeichenlichtfunktion (zweite Lichtfunktion). Die zweite Leuchteinheit 8 umfasst zwei Leuchtdioden 3" der Leuchtdioden 3, wobei jeweils eine Leuchtdiode 3" in einem stirnseitigen Bereich der Trägerplatte 2 angeordnet ist. Die quer zur Fahrzeuglängsrichtung lang gestreckte Trägerplatte 2 weist somit eine obere Reihe von mehreren Leuchtdioden 3' auf zur Erzeugung der ersten Lichtfunktion und lediglich zwei Leuchtdioden 3", die jeweils unterhalb der endseitigen Leuchtdiodenreihe der ersten Leuchteinheit 5 angeordnet sind. Den beiden Leuchtdioden 3" ist eine Lichtumlenkeinrichtung 9 zugeordnet, die sich in Hauptabstrahlrichtung H vor denselben erstreckt und diese nach außen hin abdeckt. Die Lichtumlenkeinrichtung 9 umfasst zwei Reflektorelemente 10, von denen jeweils ein Reflektorelement den Leuchtdioden 3 zugeordnet sind. Die Reflektorelemente 10 verfügen jeweils über schalenförmige Reflexionsflächen 11, so dass das von den Leuchtdioden 3" emittierte Licht 12 im Wesentlichen senkrecht zur Hauptabstrahlrichtung H in Richtung einer das Kennzeichen des Fahrzeugs aufweisenden Kennzeichenfläche 13 umgelenkt wird, siehe Figur 1. Das Licht 12 kann in einem spitzen Winkel und/oder rechten Winkel und/oder stumpfen Winkel durch das Reflektorelement 10 umgelenkt werden. Beispielsweise kann das Licht 12 in einem Winkelbereich zwischen 75° und 190° umgelenkt werden, je nachdem in welcher räumlichen Anordnung sich die Signalleuchte zu der Kennzeichenfläche 13 befindet.

Auf einer den Reflexionsflächen 11 abgewandten Seite des Reflektorelementes 10 ist eine weitere Reflexionsfläche 14 angeordnet, an der ein Teillichtbündel des von den Leuchtdioden 3' der ersten Leuchteinheit 5 emittierten Lichtes 7 in Hauptabstrahlrichtung H zur Erzeugung der ersten Lichtfunktion reflektiert wird.

Das Reflektorelement 10 deckt die Leuchtdiode 3" vollständig ab, so dass dieselbe von vorne nicht sichtbar ist.

Das Reflektorelement 10 kann vorzugsweise einstückig mit dem Reflektor 6 der ersten Leuchteinheit 5 verbunden sein.

Die Leuchtdioden 3' erzeugen vorzugsweise rotfarbiges Licht 7, die Leuchtdioden 3" erzeugen vorzugsweise weißes Licht 12.

Die Leuchtdioden 3, 3', 3" der ersten Leuchteinheit 5 und der zweiten Leuchteinheit 8 weisen jeweils eine Symmetrieachse S auf, die parallel zueinander verlaufen. Die Leuchtdioden 3' und 3" sind in gleicher Richtung ausgerichtet, wobei sie auf der gemeinsamen Trägerplatte 2 angeordnet sind.

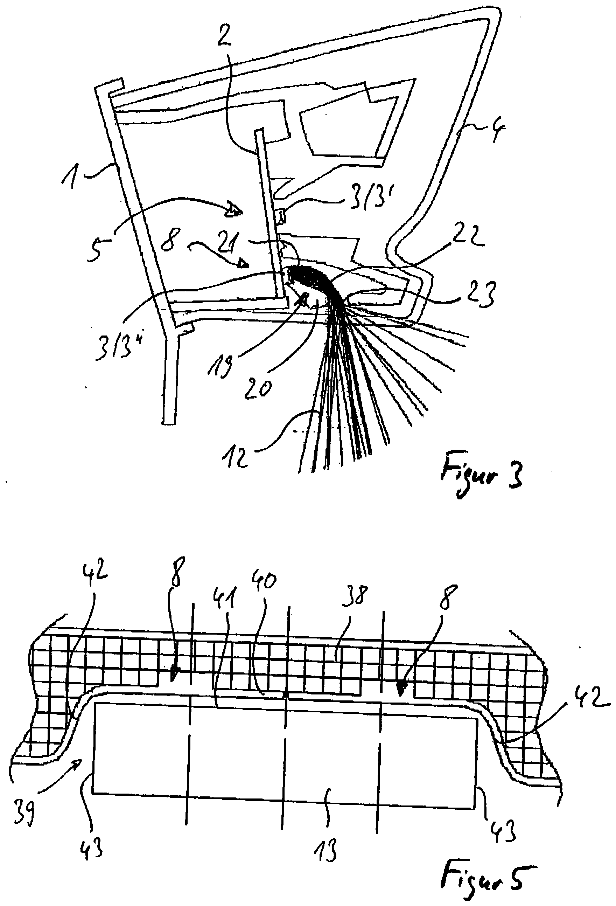

Nach einer zweiten Ausführungsform einer Signalleuchte gemäß Figur 3 kann im Unterschied zu dem vorhergehend beschriebenen Ausführungsbeispiel eine Lichtumlenkeinrichtung 19 vorgesehen sein, die ein Lichtleitelement 20 umfasst zur Umlenkung des Lichtes 12 der zweiten Leuchteinheit 8. Das Lichtleitelement 20 ist nach Art eines Lichtleiters aufgebaut und weist auf einer der Leuchtdiode 3" zugewandten Stirnseite eine Lichteinkoppelfläche 21, eine Mantelfläche 22 zur Totalreflexion des eingekoppelten Lichtes 12 sowie in einem spitzen Winkel zu der Lichteinkoppelfläche 21 orientierte Lichtauskoppelfläche 23 auf, an der das Licht in Richtung der Kennzeichenfläche 13 aus dem Lichtleitelement 20 ausgekoppelt wird. Das Lichtleitelement 20 ist vorzugsweise als bogenförmiges Zylinderteil ausgebildet, wobei die gegenüberliegenden Stirnseiten des Zylinderteils die Lichteinkoppelfläche 21 und die Lichtauskoppelfläche 23 bilden. Die Mantelfläche 22 ist vorzugsweise mit prismatischen oder parabelförmigen Facettenflächen versehen.

Gleiche Bauteile bzw. Bauteilfunktionen der beschriebenen Ausführungsbeispiele werden mit den gleichen Bezugsziffern versehen.

Nach einer dritten Ausführungsform der Signalleuchte gemäß Figur 4 dient im Unterschied zu den vorhergehenden Ausführungsbeispielen die zweite Leuchteinheit 8 zur Erzeugung einer Blinklichtfunktion. Zu diesem Zweck ist zum einen eine Lichtumlenkeinrichtung 29 mit einem Reflektorelement 30 vorgesehen, das in Hauptabstrahlrichtung H vor den Leuchtdioden 3" angeordnet ist. Zum anderen erstreckt sich benachbart zu der Trägerplatte 2 eine in dem Gehäuse integrierte Reflexionsfläche 31, an der das von den Leuchtdioden 3" emittierte und an dem Reflektorelement 30 in einem Winkelbereich umgelenkte Licht 32 in Hauptabstrahlrichtung H umgelenkt wird, so dass es entsprechend einer vorgegebenen Blinklichtverteilung durch die Lichtscheibe 4 in die Umgebung austritt. Zur Erzeugung der Blinklichtfunktion wird das Licht 32 somit zweifach umgelenkt, wobei es an der Lichtscheibe 4 in einem Lichtaustrittsbereich abgestrahlt wird, der in einem Abstand A zu einem Lichtaustrittsbereich angeordnet ist, in dem das Licht 7 der ersten Leuchteinheit 5 durch die Lichtscheibe 4 abgestrahlt wird. Der Zwischenraum zwischen den Lichtaustrittsbereichen der Lichtscheibe 4 wird durch einen Rückstrahlerbereich 33 gebildet, der beispielsweise eine Prismenstruktur 34 auf einer den Leuchtdioden 3', 3" zugewandten Innenseite der Lichtscheibe 4 umfasst. Der Rückstrahlerbereich 33 deckt vorzugsweise eine Vorderfläche 35 des Reflektorelementes 30 ab, so dass ein einheitliches Erscheinungsbild des Rückstrahlers ermöglicht wird. Das Reflektorelement 30 erfüllt somit zusätzlich neben der Umlenkfunktion eine Designfunktion zur Gestaltung des zwischenraumes zwischen den der jeweiligen Lichtfunktionen zugeordneten Lichtaustrittsbereichen.

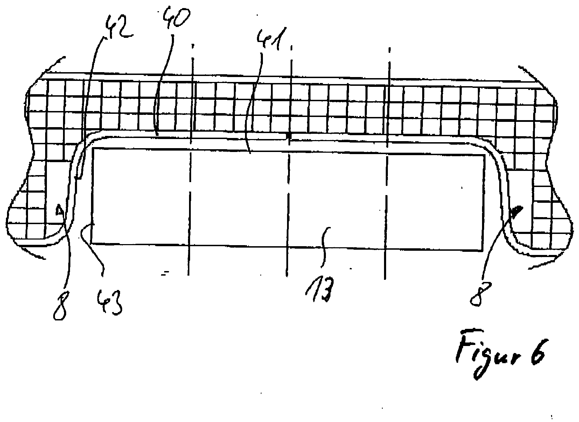

Nach einer weiteren Ausführungsform einer Signalleuchte gemäß Figur 5 kann eine Lichtscheibe 38 der Signalleuchte lang gestreckt ausgebildet sein und die Kennzeichenfläche 13 teilweise einfassen. Die Lichtscheibe 38 weist auf einer in vertikaler Richtung unteren Seite eine Aussparung 39 auf, in der die Kennzeichenfläche 13 teilweise angeordnet ist. Eine Längsseite 40 der Aussparung 39 grenzt an einer oberen Längsseite 41 der Kennzeichenfläche 13 und gegenüberliegende Stirnseiten 42 der Aussparung 39 grenzen an einer Stirnseite 43 der Kennzeichenfläche 13 an. In einem in Lichtabstrahlrichtung H hinter der Lichtscheibe 38 angeordneten Bereich können mehrere Leuchteinheiten angeordnet sein zur Erzeugung einer Schlusslicht-, Bremslicht-, Rückfahrtlicht-, Blinklichtfunktion. Die den Leuchteinheiten zugeordneten Leuchtdioden sind jeweils auf der gemeinsamen in der Tragebene T verlaufenden Trägerplatte 2 angeordnet. Die zweite Leuchteinheit 8 zur Erzeugung der Kennzeichenleuchtfunktion kann gemäß der Ausführungsform nach Figur 5 an der Längsseite 40 der Aussparung 39 angeordnet sein. Alternativ kann gemäß der Ausführungsform nach Figur 6 die zweite Leuchteinheit 8 auch an gegenüberliegenden Stirnseiten 42 der Aussparung 39 angeordnet sein.

Die parallel zu der Lichtscheibe 38 verlaufende Trägerplatte 2 zur Aufnahme der Leuchtdioden 3, 3', 3" kann vorzugsweise geteilt ausgebildet sein, so dass mittels eines linken und eines rechten Abschnitts die Trägerplatte 2 einfacher an Unebenheiten der Karosserie angepasst werden können.

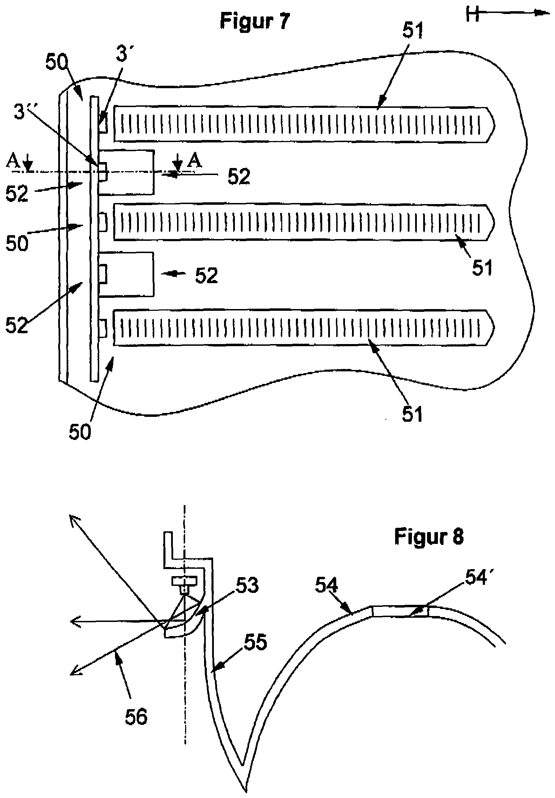

Nach einer weiteren Ausführungsform der Erfindung gemäß den Figuren 7 und 8 ist eine erste Leuchteinheit 50 zur Erzeugung einer Schlusslichtfunktion vorgesehen. Die erste Leuchteinheit 50 besteht aus mehreren Reihen von Leuchtdioden 3', denen jeweils ein Lichtleiter 51 vorgelagert ist. Die Lichtleiter 51 ermöglichen eine Weiterleitung des von den Leuchtdioden 3' emittierten Lichtes in Hauptabstrahlrichtung H.

Zwischen den Reihen der ersten Leuchteinheit 50 ist jeweils eine Reihe einer zweiten Leuchteinheit 52 vorgesehen, die zur Erzeugung einer Seitenmarkierungslichtfunktion dienen. Zu diesem Zweck sind den Leuchtdioden 3" jeweils ein Licht umlenkendes Reflektorelement 53 zugeordnet, das einstückig mit einem Reflektor 54 einer benachbarten Lichtfunktion verbunden sein kann, wobei der Reflektor 54 eine Öffnung 54' für eine Lampenfassung aufweisen kann. Das Reflexionselement 53 erhebt sich aus der Ebene eines Reflektorfortsatzes 55 des Reflektors 54 bogenförmig und ermöglicht eine Umlenkung des von der zweiten Lichteinheit 52 emittierten Lichtes 56 um einen stumpfen bis überstumpfen Winkel.

## Patentansprüche

1. Signalleuchte für Fahrzeuge, insbesondere Heckleuchte, mit einem Gehäuse (1), in dem eine Mehrzahl von auf einer in einer Tragebene verlaufenden Trägerplatte (2) angeordneten Leuchtdioden (3, 3', 3") untergebracht sind, und mit einer in Lichthauptabstrahlrichtung vorne angeordneten Öffnung des Gehäuses (1) abdeckenden Lichtscheibe (4), dass auf der Trägerplatte (2) zum einen mindestens eine erste Leuchteinheit (5) mit mindestens einer ersten Leuchtdiode (3, 3') zur Erzeugung einer ersten Lichtfunktion und zum anderen mindestens eine zweite Leuchteinheit (8) mit mindestens einer zweiten Leuchtdiode (3, 3") zur Erzeugung einer zweiten Lichtfunktion angeordnet ist, **dadurch gekennzeichnet, dass** der zweiten Leuchteinheit (8) eine Lichtumlenkeinrichtung (9, 19, 29) zugeordnet ist, die ein Lichtleitelement (19) oder ein Reflektorelement (10, 30) aufweist, derart, dass zum einen das von der zweiten Leuchteinheit (8) emittierte Licht (12) entweder in einem Winkel zwischen 75° und 190° zu einer Hauptabstrahlrichtung (H) der ersten Leuchteinheit (5) durch die Lichtscheibe (4, 38) in die Umgebung auf eine Fläche (13) des Fahrzeugs abgestrahlt wird, wenn die Signalleuchte im Fahrzeug montiert wird, oder zum anderen das von der zweiten Leuchteinheit (8) emittierte Licht (12) um mindestens einen spitzen Winkel umgelenkt wird und auf eine Fläche fällt, die als eine Reflexionsfläche (31) ausgebildet ist, die sich innerhalb des Gehäuses (1) befindet und die das durch die Lichtumlenkeinrichtung (29) umgelenkte Licht in Hauptabstrahlrichtung (H) der ersten Leuchteinheit (5) reflektiert, derart, dass der Lichtaustrittsbereich der ersten Leuchteinheit (5) in einem Abstand (A) zu dem Lichtaustrittsbereich der zweiten Leuchteinheit (8) angeordnet ist, und dass der ersten Leuchtdiode (3, 3') ein Reflektor (6) oder ein Lichtleiter (51) zugeordnet ist.

2. Signalleuchte nach Anspruch 1, **dadurch gekennzeichnet, dass** die Leuchtdioden (3, 3', 3") der ersten Leuchteinheit (5) und der zweiten Leuchteinheit (8) jeweils parallel zueinander verlaufende Symmetrieachsen (S) aufweisen.

3. Signalleuchte nach Anspruch 1 oder 2, **dadurch gekennzeichnet, dass** die Lichtumlenkeinrichtung (9, 19, 29) in Hauptabstrahlrichtung (H) der ersten Leuchteinheit (5) vor der zweiten Leuchteinheit (8) angeordnet ist, derart, dass die Leuchtdioden (3, 3") der zweiten Leuchteinheit (8) durch die Lichtumlenkeinrichtung (9, 19, 29) verdeckt sind.

4. Signalleuchte nach einem der Ansprüche 1 bis 3, **dadurch gekennzeichnet, dass** die Fläche (13) beabstandet zu dem Gehäuse (1) der Signalleuchte angeordnet ist und als eine Kennzeichenfläche (13) des Fahrzeugs ausgebildet ist, wobei die zweite Leuchteinheit (8) zur Erzeugung einer Kennzeichenlichtfunktion dient.

5. Signalleuchte nach einem der Ansprüche 1 bis 4, **dadurch gekennzeichnet, dass** eine Mehrzahl von Leuchteinheiten (5, 8) in einem Heckbereich des Fahrzeugs angeordnet sind, wobei die Lichtscheibe (38) lang gestreckt ausgebildet ist und eine Aussparung aufweist, in der die Kennzeichenfläche (13) benachbart zu einer Unterseite der Aussparung (39) eingefasst ist, und dass die zweite Leuchteinheiten (8) in einem Bereich von gegenüberliegenden Stirnseiten (42) der Aussparung (39) oder in einem Bereich einer Längsseite (40) der Aussparung (39) angeordnet sind.

6. Signalleuchte nach einem der Ansprüche 1 bis 5, **dadurch gekennzeichnet, dass** in einem in Hauptabstrahlrichtung (H) vor der Lichtumlenkeinrichtung (29) liegender Bereich ein Rückstrahler (33) angeordnet ist.

7. Signalleuchte nach einem der Ansprüche 1 bis 6, **dadurch gekennzeichnet, dass** die Leuchtdioden (3, 3', 3") der Leuchteinheiten (5, 8) eine der Lichtfunktion derselben zugeordnete Farbe entsprechendes Licht abstrahlen und das die Lichtscheibe (4, 38) glasklar ausgebildet ist.

8. Signalleuchte nach einem der Ansprüche 1 bis 7, **dadurch gekennzeichnet, dass** die Lichtumlenkeinrichtung (9, 19, 29, 53) einstückig an das Gehäuse (1) oder an einen Reflektorfortsatz (55) angeformt ist.

## Claims

1. A signal lamp for vehicles, especially a tail lamp, having a housing (1), in which a plurality of light-emitting diodes (3, 3', 3") arranged on a support plate (2) running in a support plane are accommodated, and having a cover glass (4) covering an opening of the housing (1) arranged at the front in the light main radiation direction, wherein, on the one hand, at least one first lighting unit (5) with at least one first light-emitting diode (3, 3') for producing a first lighting function and, on the other hand, at least one second lighting unit (8) with at least one second light-emitting diode (3, 3") for producing a second lighting function are arranged on the support plate (2),
**characterized in that** a light deflecting device (9, 19, 29) is associated with the second lighting unit (8), which light deflecting device has a light conducting element (19) or a reflector element (10, 30) in such a way that, on the one hand, the light (12) which is emitted from the second lighting unit (8) is radiated either at an angle between 75° and 190° to a main radiation direction (H) of the first lighting unit (5) through the cover glass (4,38) into the environment onto a surface (13) of the vehicle, if the signal lamp is mounted in the vehicle, or, on the other hand, the light (12) which is emitted from the second lighting unit (8) is deflected by at least an acute angle and falls onto a surface which is configured as a reflection surface (31) which is located within the housing (1) and the light deflected by the light deflecting device (29) is reflected in the main radiation direction (H) of the first lighting unit (5) in such a way that the light emission region of the first lighting unit (5) is arranged at a distance (A) from the light emission region of the second lighting unit (8), and a reflector (6) or a light guide (51) is associated with the first light-emitting diode (3, 3').

2. The signal lamp according to Claim 1, **characterized in that** the light-emitting diodes (3, 3', 3") of the first lighting unit (5) and of the second lighting unit (8) each have symmetry axes (S) which run parallel to one another.

3. The signal lamp according to Claim 1 or 2, **characterized in that** the light deflecting device (9, 19, 29) is arranged in the main radiation direction (H) of the first lighting unit (5) in front of the second lighting unit (8) in such a way that the light-emitting diodes (3, 3") of the second lighting unit (8) are obscured by the light deflecting device (9, 19, 29).

4. The signal lamp according to any one of Claims 1 to 3, **characterized in that** in the case that the light (12) emitted from the second lighting unit (8) is radiated at an angle between 75° and 190° to a main radiation direction (H) of the first lighting unit (5) onto a surface (13) of the vehicle, if the signal lamp is mounted in the vehicle, the surface (13) is arranged at a distance from the housing (1) of the signal lamp and is configured as a license plate number surface (13) of the vehicle, wherein the second lighting unit (8) serves to produce a license plate number lighting function.

5. The signal lamp according to any one of Claims 1 to 4, **characterized in that** a plurality of lighting units (5, 8) can be arranged in a rear region of the vehicle, wherein the cover glass (38) is configured in an elongated manner and has a recess in which the license plate number surface (13) is enclosed adjacent to an underside of the recess (39) if the signal lamp is mounted in the vehicle, and the second lighting units (8) are arranged in a region of opposite faces (42) of the recess (39) or in a region of a longitudinal side (40) of the recess (39).

6. The signal lamp according to any one of Claims 1 to 5, **characterized in that** a rear reflector (33) is arranged in a region lying in the main radiation direction (H) in front of the light deflecting device (29).

7. The signal lamp according to any one of Claims 1 to 6, **characterized in that** the light-emitting diodes (3, 3', 3") of the lighting units (5, 8) radiate a light corresponding to the color associated with the lighting function of the same and the light of the cover glass (4, 38) is configured to be transparent.

8. The signal lamp according to any one of Claims 1 to 7, **characterized in that** the light deflecting device (9, 19, 29, 53) is integrally molded onto the housing (1) or on a reflector projection (55).

## Revendications

1. Feu de signalisation pour véhicules, en particulier feu arrière, avec un boîtier (1), dans lequel est installée une pluralité de diodes électroluminescentes (3, 3', 3"), qui sont disposées sur une plaque de support (2), qui s'étend sur un plan de support, et avec une vitre de feu (4), qui recouvre une ouverture du boîtier (1) disposée en avant, dans la principale direction d'émission de lumière, sachant que, sur la plaque de support (2), est disposée, d'une part, au moins une première unité d'éclairage (5), avec au moins une première diode électroluminescente (3, 3'), destinée à générer une première fonction d'éclairage, et, d'autre part, avec au moins une deuxième unité d'éclairage (8), avec au moins une deuxièmes diode électroluminescente (3, 3"), destinée à générer une deuxièmes fonction d'éclairage,
**caractérisé en ce que,**
à la deuxième unité d'éclairage (8), est associée une installation de déviation de lumière (9, 19, 29), qui présente un élément conducteur de lumière (19) ou un élément réflecteur (10, 30) de manière à ce que, d'une part, la lumière (12) émise par la deuxième unité d'éclairage (8) soit ou rayonnée dans l'environnement, sur une surface (13) du véhicule, sous un angle situé entre 75° et 190°, dans une principale direction de rayonnement de lumière (H) de la première unité d'éclairage (5), à travers la vitre de feu (4, 38), lorsque le feu de signalisation est monté dans le véhicule, ou que, d'autre part, la lumière (12), émise par la deuxième unité d'éclairage (8), soit déviées sous au moins un angle aigu et tombe sur une surface, qui est conçue en tant que surface de réflexion (31), laquelle se trouve à l'intérieur du boîtiers (1) et réfléchit la lumière, déviée par l'installation de déviation de lumière (29), dans la principale direction de rayonnement (H) de la première unité d'éclairage (5), de manière à ce que la zone de sortie de lumière de la première unité d'éclairage (5) soit située à un intervalle (A) de la zone de sortie de lumière de la deuxième unité d'éclairage (8), et qu'un réflecteur (6) ou un guide de lumière (51) est associé à la première diode électroluminescente (3, 3').

2. Feu de signalisation selon la revendication 1, **caractérisé en ce que** les diodes électroluminescentes (3, 3', 3") de la première unité d'éclairage (5) et de la deuxième unité d'éclairage (8) présentent respectivement des axes de symétrie (S), qui s'étendent parallèlement les uns par rapport aux autres.

3. Feu de signalisation selon revendication 1 ou 2, **caractérisé en ce que** l'installation de déviation de lumière (9, 19, 29) est disposée dans la principale direction de rayonnement (H) de la première unité d'éclairage (5) en amont de la deuxième unité d'éclairage (8), de manière à ce que les diodes électroluminescentes (3, 3") de la deuxième unité d'éclairage (8) soient recouvertes par l'installation de déviation de lumière (9, 19, 29).

4. Feu de signalisation selon l'une des revendications 1 à 3, **caractérisé en ce que,** dans le cas, où la lumière (12) émise par la deuxième unité d'éclairage (8) est rayonnée sous un angle situé entre 75° et 190°, vers une principale direction de rayonnement (H) de la première unité d'éclairage (5), sur une surface (13) du véhicule, lorsque le feu de signalisation est monté dans le véhicule, la surface (13) est disposée à distance du boîtier (1) du feu de signalisation et est réalisée en tant que surface d'immatriculation (13) du véhicule, sachant que la deuxième unité d'éclairage (8) sert à générer une fonction d'éclairage de la plaque d'immatriculation.

5. Feu de signalisation selon l'une des revendications 1 à 4, **caractérisé en ce qu'**une pluralité d'unités d'éclairage (5, 8) peut être disposée dans une zone arrière du véhicule, sachant que le vitre de feu (38) est de forme allongée et présente un évidement, dans lequel la surface d'immatriculation (13) est encastrée, à proximité d'un côté inférieur de l'évidement (39), lorsque le feu de signalisation est monté dans le véhicule, et que les deuxièmes unités d'éclairage (8) sont disposées dans une zone de côtés frontaux opposés (42) de l'évidement (39) ou dans une zone d'un côté longitudinal (40) de l'évidement (39).

6. Feu de signalisation selon l'une des revendications 1 à 5, **caractérisé en ce que,** dans une zone située en amont de l'installation de déviation de lumière (29), dans la principale direction de rayonnement (H), est disposé un feu arrière (33).

7. Feu de signalisation selon l'une des revendications 1 à 6, **caractérisé en ce que** les diodes électroluminescentes (3, 3', 3") des unités d'éclairage (5, 8) rayonnent une lumière, qui correspond à la couleur associée à la fonction d'éclairage de celles-ci, et que la vitre de feu (4, 38) est de conception claire comme le verre.

8. Feu de signalisation selon l'une des revendications 1 à 7, **caractérisé en ce que** l'installation de déviation de lumière (9, 19, 29, 53) est formée d'une pièce avec le boîtier (1).
